# EUROPEAN PATENT SPECIFICATION

(11) **EP 2 371 690 B1**
(45) Date of publication and mention of the grant of the patent: **15.10.2014**
(21) Application number: 11159513.8
(22) Date of filing: 24.03.2011
(51) Int. Cl.: B62J 37/00, B62K 11/10

(54) **Motor scooter type vehicle**
Motorrollerartiges Fahrzeug
Véhicule de type scooter à moteur

(30) Priority: 31.03.2010 JP 2010083027
(43) Date of publication of application: 05.10.2011
(73) Proprietor: Honda Motor Co., Ltd., Tokyo 107-8556 (JP)
(72) Inventor: Yamada, Hiroshi, SAITAMA 351-0193 (JP)
(74) Representative: Ilgart, Jean-Christophe

(56) References cited:
- EP-A2- 2 305 544
- US-A1- 2002 166 709

## Description

### [Technical Field]

The present invention relates to an improvement in a motor scooter type vehicle, particularly to an improvement of the layout of a fuel filter provided in a motor scooter type vehicle.

### [Background Art]

As a conventional motor scooter type vehicle, there has been known one in which a fuel filter is provided at an intermediate part of a fuel supply line for supplying a fuel in a fuel tank to a combustion chamber of an engine (see, for example, Patent Document 1 (FIGS. 1 and 2)).

As shown in FIG. 1 of Patent Document 1, a motor scooter type vehicle (10) (parenthesized symbols are those used in Patent Document 1, here and hereafter) is provided with a unit swing type engine (22) swingably mounted to a rear frame (135b), and a fuel tank (25) disposed under a step floor (24) on which the rider's feet are put on the front side of the engine (22).

As shown in FIG. 2 of Patent Document 1, the fuel in the fuel tank (25) is fed through a conduit (321) to the fuel filter (34), where it is clarified, before being supplied to the engine through a fuel pump (26).

However, when the fuel filter (34) is disposed in the space on the lower side of the cylinder head (308) and the head cover (311) on the rear side of the fuel tank (25) in the vehicle front-rear direction as shown in FIG. 1 of Patent Document 1, swinging of the unit swing type engine (22) results in that the cylinder head (308) and the head cover (311) are also swung up and down, so that the cylinder head (308) and the head cover (311) come to be proximate to the fuel filter (34).

In order to secure a clearance between the fuel filter (34) and the cylinder head (308) as well as the head cover (311) when they come proximate to each other, a method of reducing the size of the fuel filter (34) may be contemplated. If the fuel filter (34) is reduced in size, however, the cycle time of element replacement for the fuel filter may be shortened. Thus, there is a need for a motor scooter type vehicle in which the capacity of a fuel filter can be set freely, without any restriction imposed by swinging of a unit swing type engine.

### [Prior Art Document]

### [Patent Document 1]

Japanese Patent Laid-open No. 2002-206466

The earlier patent document EP 2305544 discloses a prior art relevant to the question of novelty and document US 2002/166709 discloses a motor scooter type vehicle according to the preamble of claim 1.

### [Summary of the Invention]

### [Problem to be Solved by the Invention]

It is an object of the present invention to provide a motor scooter type vehicle in which the capacity of a fuel filter can be set freely, without any restriction imposed by swinging of a unit swing type engine.

### [Means for Solving the Problem]

The invention according to claim 1 provides a motor scooter type vehicle comprising a body frame, a unit swing type engine supported on the body frame in a vertically swingable manner, a fuel tank supported on the body frame on a front side of the unit swing type engine, a fuel supply line through which a fuel in the fuel tank is adapted to be supplied to the unit swing type engine, a fuel filter disposed at an intermediate portion of the fuel supply line, a pair of left and right step boards provided on vehicle lateral sides of the fuel tank, and an under cover covering a lower side of the left step board and the fuel tank, characterized in that the under cover further covers a lower side of the body frame, and the fuel filter is disposed in a space surrounded by a lateral side surface in a vehicle width direction of the fuel tank, the left step board and the under cover.

The invention according to claim 2 is characterized in that a step support frame for supporting the left step board is mounted to a lateral side of the body frame, and the fuel filter is disposed on a vehicle inner side relative to the step support frame.

The invention according to claim 3 is characterized in that the body frame has a head pipe and a main frame extending from the head pipe toward a lower rear side of the vehicle; and the step support frame is disposed on an outer side in the vehicle width direction relative to the fuel filter, and the main frame is disposed on an inner side in the vehicle width direction relative to the fuel filter, in a plan view of the vehicle.

The invention according to claim 4 is characterized in that the left step board on the upper side of the fuel filter is provided with a maintenance opening for mounting and dismounting the fuel filter therethrough, and a maintenance lid for openably closing the maintenance opening.

The invention according to claim 5 is characterized in that the main frame includes an upper frame extending from the head pipe toward a lower rear side of the vehicle, and a lower frame disposed on a lower side of the upper frame and extending from the head pipe toward a lower rear side of the vehicle; and the fuel filter is disposed between the lower frame and the step support frame in a side view of the vehicle.

The invention according to claim 6 is characterized in that the under cover is made of resin, and is integrally formed with a mounting part by which the fuel filter can be dismountably mounted to an inner surface of the resin-made under cover.

The invention according to claim 7 is characterized in that the fuel supply line is provided with a fuel supply device for supplying the fuel in the fuel tank to the unit swing type engine, a fuel pump by which the fuel in the fuel tank is adapted to be fed under pressure to the fuel supply device, and a pressure regulator which is disposed between the fuel filter and the fuel supply device and by which a portion of the fuel is adapted to be returned to the fuel tank when the fuel pressure between the fuel pump and the fuel supply device is increased to reach a predetermined pressure; and the pressure regulator is disposed in a space surrounded by the lateral side surface in the vehicle width direction of the fuel tank and the left step board and the under cover.

The invention according to claim 8 is characterized in that the fuel supply device is provided above the fuel filter in the side view of the vehicle.

The invention according to claim 9 is characterized in that, in the fuel supply line, a pre-pump filter is provided on an upstream side of the fuel pump, and the fuel filter is set to be finer in pore size than the pre-pump filter.

### [Effect of the Invention]

In the invention according to claim 1, the fuel filter is disposed in a space surrounded by a side surface of the fuel tank, the step board and the under cover. Therefore, by utilizing the space formed between the step board and the under cover on a lateral side in the vehicle width direction of the fuel tank, the capacity of the fuel filter can be freely set, without imposing any restriction on swinging of the unit swing type engine and without any restriction imposed by the swinging.

In the invention according to claim 2, the step support frame for supporting the step board is mounted to a lateral side of the body frame, and the fuel filter is disposed on the vehicle inner side relative to the step support frame. Therefore, the vehicle outer side of the fuel filter can be protected with the step support frame.

In the invention according to claim 3, the step support frame is disposed on an outer side in the vehicle width direction relative to the fuel filter, and the main frame is disposed on an inner side in the vehicle width direction relative to the fuel filter, in a plan view of the vehicle. This ensures that the frames are disposed on both left and right sides in the vehicle width direction of the fuel filter, and, accordingly, both the left and right sides in the vehicle width direction of the fuel filter can be protected with the frames.

In the invention according to claim 4, the step board on the upper side of the fuel filter is provided with the maintenance opening for mounting and dismounting the fuel filter therethrough, and the maintenance lid for openably closing the maintenance opening. Therefore, operations of mounting and dismounting the fuel filter can be performed by simply opening the maintenance lid, without being obstructed by the frames present on both the left and right sides in the vehicle width direction of the fuel filter. Accordingly, replacement work for the fuel filter can be carried out easily.

In the invention according to claim 5, the fuel filter is disposed between the lower frame and the step support frame in a side view of the vehicle, with the result that the frames are disposed on the upper and lower sides of the fuel filter. Accordingly, both the upper and lower sides of the fuel filter can be protected with the frames.

In the invention according to claim 6, the under cover is integrally formed with the mounting part by which the fuel filter can be dismountably mounted to the inner surface of the under cover. Therefore, at the time of molding the under cover made of resin, the mounting part can also be molded integrally therewith.

In addition, the number of component parts can be reduced, as compared with the case where a fuel filter mounting part is separately provided on the body frame.

In the invention according to claim 7, the pressure regulator is disposed in a space surrounded by a side surface of the fuel tank and the step board and the under cover, with the result that the pressure regulator is disposed within the front-rear length of the fuel tank. Therefore, the return pipe for returning the fuel from the pressure regulator to the fuel tank can be shortened in length.

In the invention according to claim 8, the fuel supply device is disposed above the fuel filter. This ensures that the fuel supply line between the fuel filter and the fuel supply device extends upward from the fuel filter. Therefore, leakage of the fuel from the fuel supply device due to the weight of the fuel collected in the fuel filter can be restrained, even when the vehicle is parked for a long period of time.

In the invention according to claim 9, the fuel filter is set to be finer in pore size than the pre-pump filter. Thus, the pore size in the fuel filter and the pore size in the pre-pump filter are set different from each other. This ensures that even in the case of using a fuel containing fine dust, such as ethanol, coarser dust can be trapped by the pre-pump filter and finer dust having failed to be trapped by the pre-pump filter can be trapped by the fuel filter. Accordingly, such a fuel as ethanol can also be used.

In addition, since coarser dust is trapped by the pre-pump filter and therefore coarser dust is not trapped by the fuel filter, the possibility of clogging of the fuel filter can be lowered, and the frequency of replacement of the fuel filter can be lowered. Further, since the pre-pump filter is coarse in pore size, possibility of clogging thereof can be lowered, so that the pre-pump filter is restrained from constituting a resistance against the operation of the fuel pump. This enables adoption of an inexpensive fuel pump.

### [Brief Description of the Drawings]

FIG. 1 is a side view of a motor scooter type vehicle according to the present invention.
FIG. 2 is a plan view of the motor scooter type vehicle according to the present invention.
FIG. 3 is a side view of an essential part of the motor scooter type vehicle.
FIG. 4 is a plan view of an essential part of the motor scooter type vehicle.
FIG. 5 is a sectional view taken along line 5-5 of FIG. 4.
FIG. 6 illustrates the mounting of a fuel filter and a filter support clip.
FIG. 7 illustrates the opening and closing of a maintenance lid.
FIG. 8 is a sectional view of a fuel filter.
FIG. 9 is a sectional view of a pressure regulator.
FIG. 10 is a system diagram of a fuel supply line.

### [Mode for Carrying Out the Invention]

An embodiment of the present invention will be described below based on the accompanying drawings. Incidentally, the drawings are to be viewed according to the orientation of the reference symbols, and arrow (FRONT) in the drawings indicates the vehicle front side.

A working example of the present invention will be described based on the drawings.

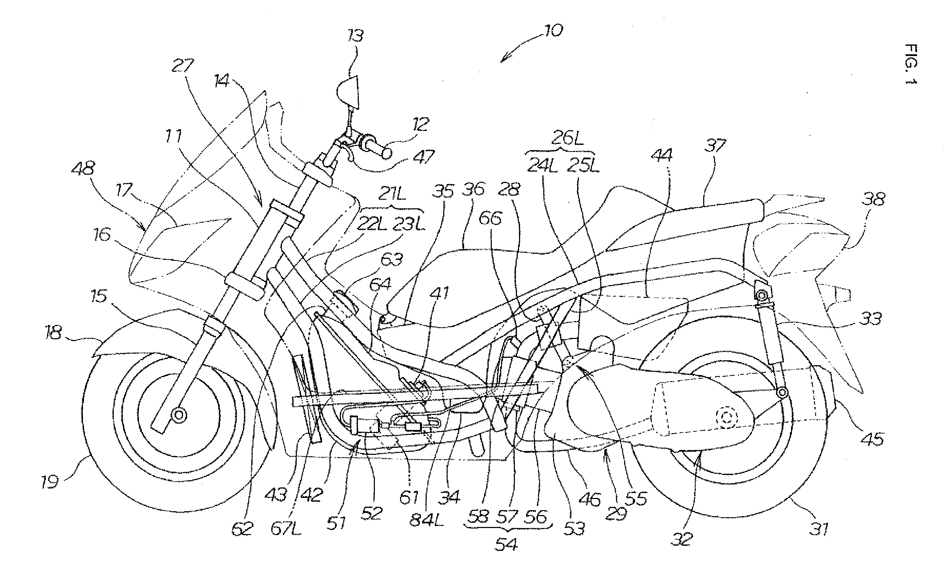

As shown in FIG. 1, a motor scooter type vehicle 10 includes a handle 12 steerably mounted to a head pipe 11, side mirrors 13 which are raised from the handle 12 and by which the driver checks the rear side, a stem pipe 14 mounted to the lower end of the handle 12, a bottom bridge 16 which is mounted to the lower end of the stem pipe 14 and which supports the upper ends of a pair of left and right front forks 15, a headlamp 17 which is disposed on the front side of the head pipe 11 and which is turned on while facing the vehicle front side, and a front wheel 19 which is supported on the front forks 15 and the upper side of which is covered with a front fender 18.

In addition, a pair of left and right main frames 21L, R (only 21L is shown) are extended from the head pipe 11 toward a rear lower side. The main frames 21L, R include a pair of left and right upper frames 22L, R (only 22L is shown) extending from the head pipe 11 toward a lower rear side of the vehicle, and a pair of left and right lower frames 23L, R (only 23L is shown) disposed under the upper frames 22L, R and extending from a lower portion of the head pipe 11 toward a lower rear side.

A pair of left and right seat rails 24L, R (only 24L is shown) are extended from intermediate portions of the upper frames 22L, R toward a rear upper side of the vehicle, and a pair of left and right sub frames 25L, R (only 25L is shown) are extended from the rear ends of the upper frames 22L, R to a rear upper side of the vehicle toward the seat rails 24L, R.

It can be said that the seat rails 24L, R and the sub frames 25L, R constitute rear frames 26L, R (only 26L is shown), and the rear frames 26L, R extend from rear portions of the main frames 21L, R toward a rear upper side of the vehicle.

The head pipe 11, the main frames 21L, R, the rear frames 26L, R and the like constitute a body frame 27.

Besides, a unit swing type engine 29 is supported on the body frame 27 (the rear frames 26L, R, specifically, the seat rails 24L, R) through a link 28 in a vertically swingable manner, and the unit swing type engine 29 is provided with a power transmission mechanism 32 for transmitting the power of the unit swing type engine 29 to a rear wheel 31. A rear cushion 33 is extended from the rear end of the seat rail 24L toward the rear end of the power transmission mechanism 32.

A storage box 35 having a bulged part 34 bulged to the lower side is supported on the upper frames 22L, R and the seat rails 24L, R; a front seat 36 on which the driver is seated is disposed on the upper side of the storage box 35; a rear seat 37 on which a pillion passenger is seated is disposed on the rear side of the front seat 36; a tail lamp 38 turned on when a brake is applied is disposed on the rear side of the rear seat 37; and a fuel tank 42 having a fuel pump 41 for feeding a fuel under pressure is supported on the lower frame 23L.

The storage box 35 is provided between the fuel tank 42 and the unit swing type engine 29.

In addition, a radiator 43 by which cooling water warmed by the unit swing type engine 29 is cooled is disposed on the front side of the fuel tank 42, an air cleaner 44 for supplying air to the unit swing type engine 29 is disposed on the upper side of the unit swing type engine 29, an exhaust pipe 46 for feeding out an exhaust gas is extended from the lower side of the unit swing type engine 29 toward a muffler 45 disposed on the right side of the vehicle, a brake lever 47 for operating to brake the rear wheel 31 is mounted to the handle 12, and the vehicle body is covered with a body cover 48 indicated by imaginary lines.

A fuel supply line 51 for feeding the fuel in the fuel tank 42 to the unit swing type engine 29 is provided near the center of the vehicle, and a fuel filter 52 is provided at an intermediate portion of the fuel supply line 51.

The unit swing type engine 29 has a crankcase 53 for containing a crankshaft therein, and a cylinder unit 54 projecting from the crankcase 53 toward the vehicle front side, and an upper portion 55 of the crankcase 53 is connected to the body frame 27 through a link 28.

The cylinder unit 54 is composed of a cylinder block 56 projected forward from a front portion of the crankcase 53, a cylinder head 57 provided at the front end of the cylinder block 56, and a head cover 58 provided at the front end of the cylinder head 57.

In addition, the fuel supply line 51 is provided with a pre-pump filter 61 on the upstream side of the fuel pump 41, and the fuel filter 52 is set to be finer in pore size than the pre-pump filter 61.

The fuel tank 42 has a fuel supply port 62 disposed on the front side of the front seat 36, and the fuel supply port 62 is closed with a fuel supply cap 63. The fuel tank 42 is inclined rearwardly downward from the position of the fuel supply port 62, and the fuel pump 41 is provided at a lower portion of the inclined part 64.

The injector 66 as the fuel supply device for supplying the fuel in the fuel tank 42 to the unit swing type engine 29 is provided above the fuel filter 52, in a side view of the vehicle.

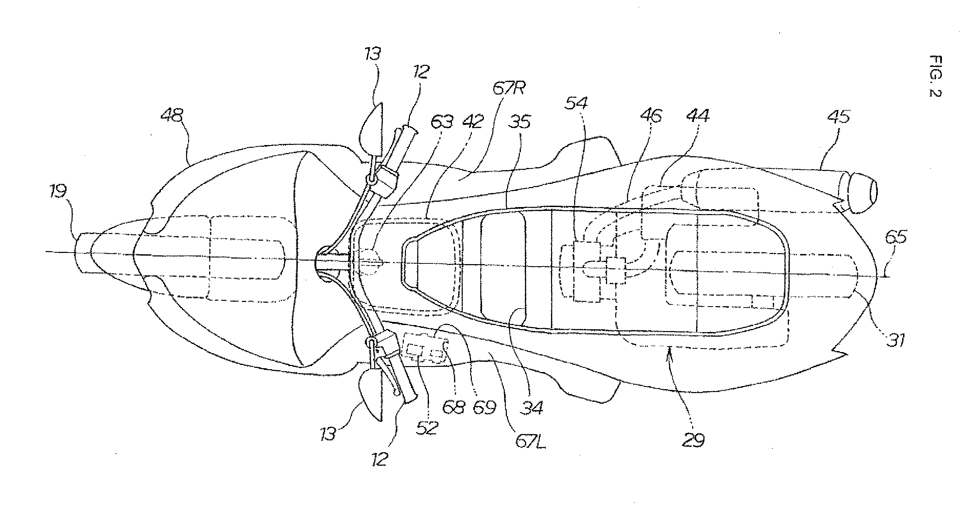

As shown in FIG. 2, the exhaust pipe 46 and the fuel filter 52 are laid out distributedly to the left and right sides of the vehicle, with the vehicle body center line 65 therebetween.

The fuel filter 52 is disposed on a lateral side in the vehicle width direction of the storage box 35.

In addition, as shown in FIG. 1, the bulged part 34 of the storage box 35 is located between the fuel tank 42 and the cylinder unit 54 of the unit swing type engine 29, so that the capacity of the storage box 35 can be set large.

The body frame (FIG. 1, symbol 27) is provided thereon with a pair of left and right step boards 67L, 67R on which to put the driver's feet. The step board 67L on the upper side of the fuel filter 52 is provided with a maintenance opening 68 for mounting and dismounting the fuel filter 52 therethrough, and a maintenance lid 69 for openably closing the maintenance opening 68.

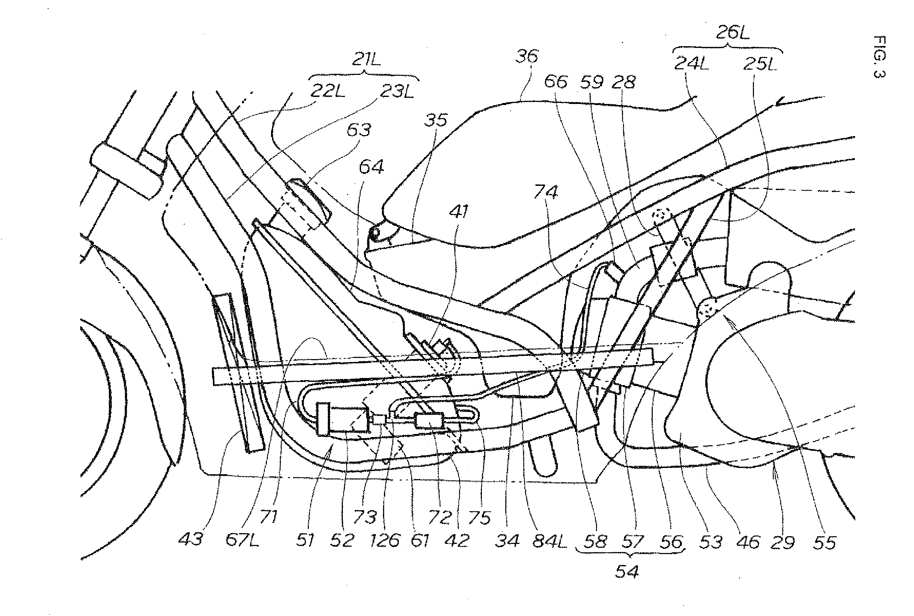

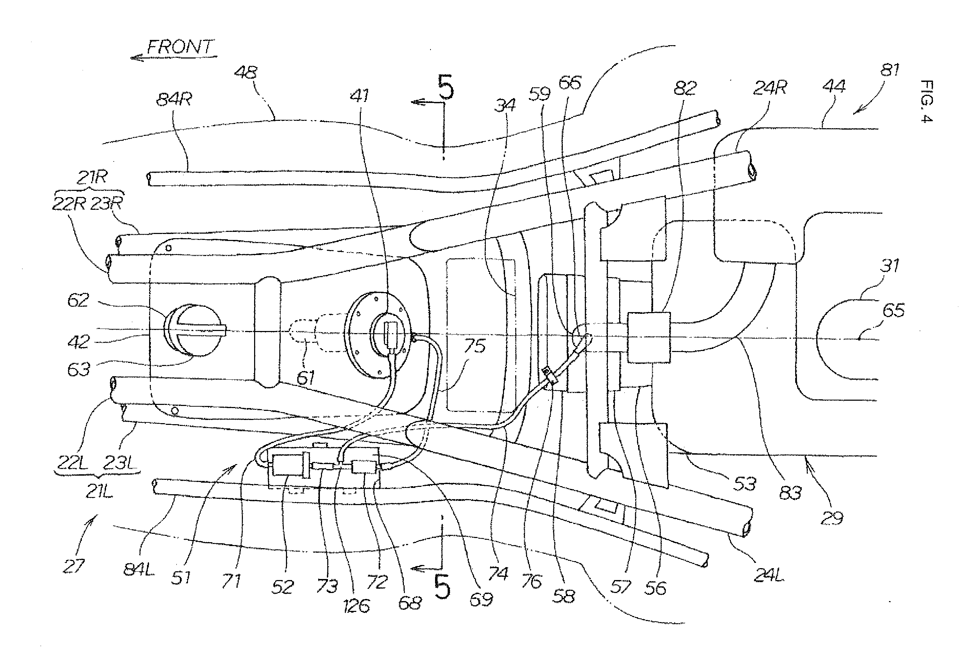

Now, layout of the fuel filter 52 will be described below, using FIGS. 3 and 4.

As shown in FIG. 3, the fuel supply line 51 for supplying the unit swing type engine 29 with the fuel is connected to the fuel tank 42. The fuel supply line 51 is provided with the pre-pump filter 61 for clarifying the fuel in the fuel tank 42, the fuel pump 41 disposed on the downstream side of the pre-pump filter 61, the fuel filter 52 disposed on the downstream side of the fuel pump 41 and set to be finer in pore size than the pre-pump filter 55, and an injector 66 as a fuel supply device for supplying the fuel to the unit swing type engine 29, which are laid out in this order from the front side of the vehicle.

Incidentally, the pre-pump filter 61 and the fuel pump 41 are provided in the fuel tank 42, and the injector 66 is mounted to an intake pipe 59.

Besides, the fuel supply line 51 is composed of a first fuel pipe 71 extended from the fuel pump 41 and connected to the fuel filter 52, a second fuel pipe 73 extended from the fuel filter 52 and connected to the upstream side of a pressure regulator 72, and a third fuel pipe 74 which is extended from a branching part 126 disposed on the upstream side of the pressure regulator 72 and which is connected to the injector 66. By this configuration, the fuel in the fuel tank 42 is supplied from the injector 66 to the unit swing type engine 29 side.

As shown in FIG. 4, the pressure regulator 72 returns a portion of the fuel to the fuel tank 42 through a return pipe 75 connecting the pressure regulator 72 and the fuel tank 42 to each other when the fuel pressure in the fuel supply line 51 between the fuel pump 41 and the injector 66 is increased to reach a predetermined pressure.

In addition, the third fuel pipe 74 is held by a pipe clip 76 provided on the head cover 58.

The pressure regulator 72 is disposed between the fuel filter 52 and the injector 66. It can be said that the pressure regulator 72 is disposed between the second fuel pipe 73 and the third fuel pipe 74.

An intake system 81 is composed of the intake pipe 59 connected to an upper portion of the cylinder head 57, a throttle body 82 connected to the intake pipe 59, and an air cleaner 44 connected to the throttle body 82 through a connecting tube 83.

The injector 66 is mounted to the intake pipe 59, and the fuel is supplied to the engine 29 side by the injector 66.

A step support frame 84L is disposed on an outer side in the vehicle width direction relative to the fuel filter 52 (on the left side of the fuel filter 52), and the upper frame 22L and the lower frame 23L are disposed on an inner side in the vehicle width direction relative to the fuel filter 52 (on the right side of the fuel filter 52), in a plan view of the vehicle.

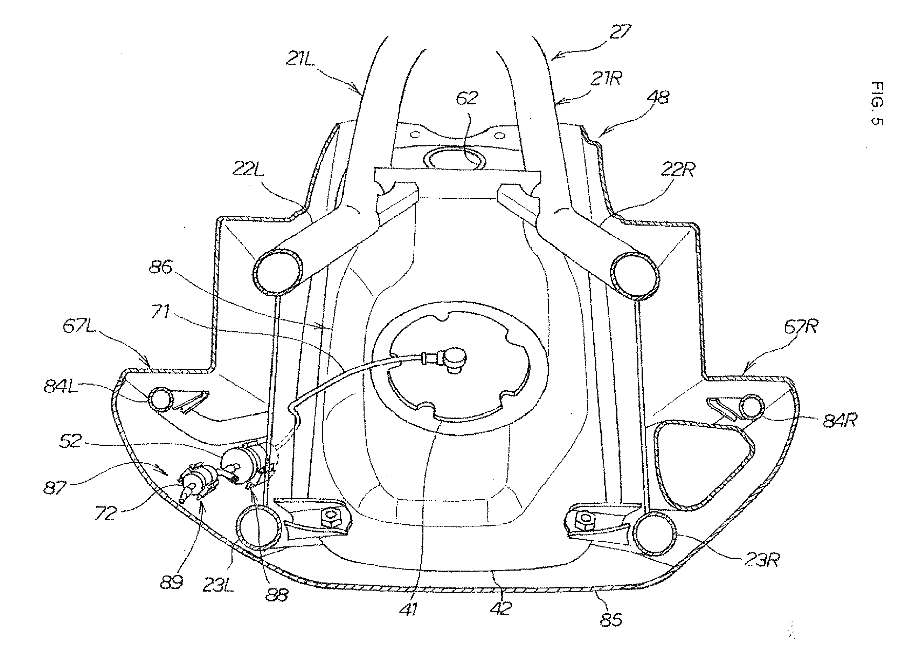

As shown in FIG. 5, the body cover 48 includes a pair of left and right step boards 67L, 67R supported by the step support frames 84L, 84R on vehicle lateral sides of the fuel tank 42, and an under cover 85 covering the lower side of the step boards 67L, 67R, the step support frames 84L, 84R, the lower frames 23L, 23R and the fuel tank 42.

The fuel filter 52 and the pressure regulator 72 are disposed in a space surrounded by a side surface 86 of the fuel tank 42 and the step board 67L and the under cover 85.

The under cover 85 is made of resin, and is integrally formed with a mounting part 88 by which the fuel filter 52 can be dismountably mounted to an inner surface 87 of the under cover 85, and with a regulator mounting part 89 by which the pressure regulator 72 can be dismountably mounted to the inner surface 87.

Now, the mounting part 88 will be described below.

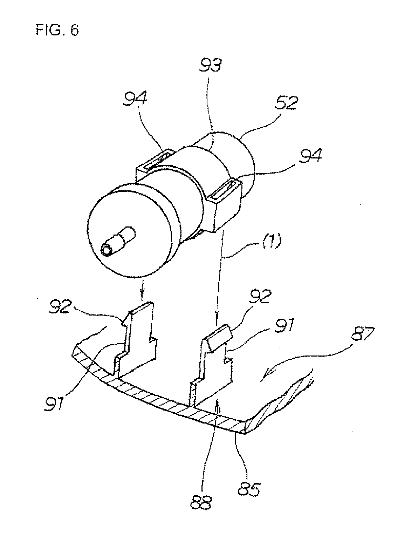

As shown in FIG. 6, the mounting part 88 molded integrally with the under cover 85 is composed of two bracket parts 91 rising from an inner surface 87 thereof, and claw parts 92 provided at the tips of the bracket parts 91. The fuel filter 52 is held by a rubber band 93, and the rubber band 93 is provided with two through-holes 94 for hooking the claw parts 92 thereon.

The rubber band 93 holding the fuel filter 52 is moved as indicated by arrow (1), and the claw parts 92 are hooked on the through-holes 94, whereby the fuel filter 52 is mounted to the mounting part 88.

Incidentally, the regulator mounting part 89 also has the same structure as that of the mounting part 88. The pressure regulator 72 also is fitted with the rubber band 93, like the fuel filter 52, and the pressure regulator 72 also is mounted in a similar manner.

Now, the maintenance lid 69 will be described below.

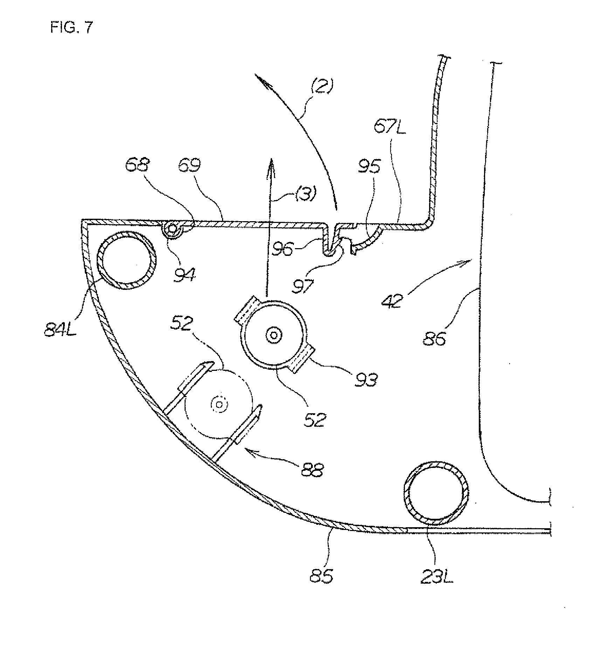

As shown in FIG. 7, the maintenance lid 69 is provided at the step board 67L.

A hinge 94 is provided at an end portion of the maintenance lid 69. With a finger put into a recess 95, the maintenance lid 69 is opened and closed as indicated by arrow (2). A claw 97 is provided at a stepped part 96, and, with the claw 97 caught on the step board 67L, the maintenance lid 69 is kept in a closed state.

Besides, with the maintenance lid 69 in an opened state, the fuel filter 52 indicated by imaginary line is detached from the mounting part 88, and the fuel filter 52 is taken out as indicated by arrow (3). Incidentally, it suffices for the maintenance lid 69 to be so sized that mounting and dismounting of only the fuel filter 52 can be performed via the maintenance lid 69.

Now, the fuel filter 52 will be described below.

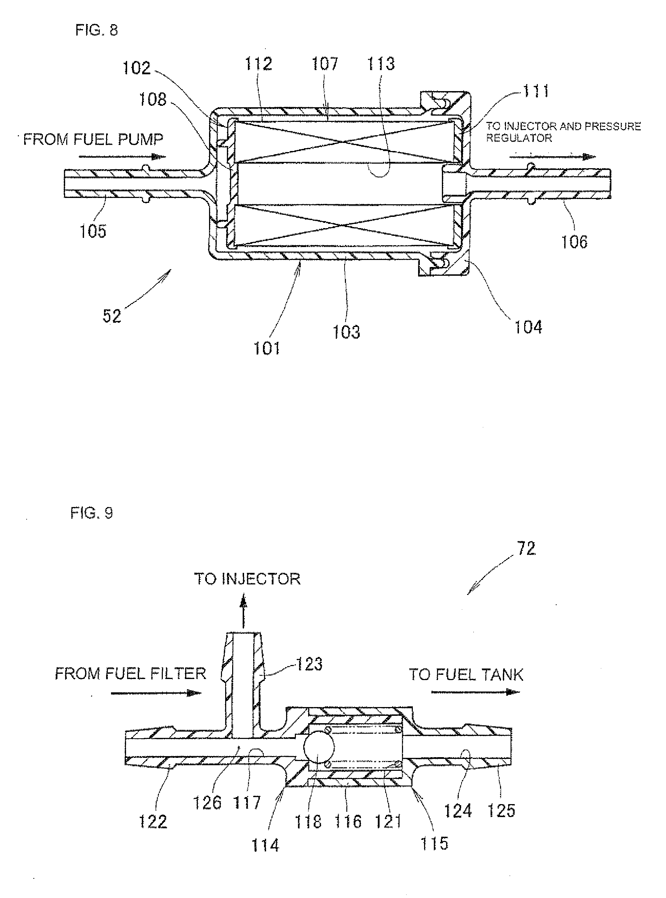

As shown in FIG. 8, the fuel filter 52 is composed of a filter case 101, and a filter assembly 102 contained in the filter case 101.

The filter case 101 is composed of a case body 103 having a bottomed tubular shape, and a case cover 104 for closing an opening part of the case body 103.

The case body 103 is provided with a fuel suction port 105 which is connected to the fuel pipe (FIG. 3, symbol 71) on the fuel tank (FIG. 3, symbol 42) side and through which the fuel is sucked in. The case cover 104 is provided with a fuel discharge port 106 which is connected to the second fuel pipe (FIG. 3, symbol 73) on the injector (FIG. 3, symbol 66) side and through which the fuel is discharged.

The filter assembly 102 is composed of a cylindrical filter 107 made of filter paper, and frame bodies 108 and 111 for supporting both ends of the filter 107. The filter assembly 102 is fixed in the state of being clamped between the case body 103 and the case cover 104.

The fuel is sucked through the fuel suction port 105 into the filter case 101, then flows through the filter 107 from its outer peripheral surface 112 to its inner peripheral surface 113, when the fuel is filtered, and the filtered fuel is discharged through the fuel discharge port 106 to the exterior of the filter case 101.

Now, the pressure regulator 72 will be described below.

As shown in FIG. 9, the pressure regulator 72 is composed of a case 116 having a resin-made first case 114 and a resin-made second case 115 joined to each other, a copper-made spherical valve element 118 for opening and closing a passage hole 117 bored in the bottom on one end side of the case 116, a helical compression spring 121 for biasing the valve element 118 so as to close the passage hole 117, a fuel suction port 122 in which the passage hole 117 is bored, a fuel discharge port 123 formed at an intermediate part of the fuel suction port 122, a fuel return port 125 provided with a passage hole 124 bored in the bottom on the other end side of the case 116, and a branching part 126 formed between the fuel suction port 122 and the fuel discharge port 123 on the upstream side of the valve element 118.

The fuel suction port 122 is connected to the fuel filter (FIG. 3, symbol 52) through the second fuel pipe (FIG. 3, symbol 73), whereas the fuel discharge port 123 is connected to the injector (FIG. 3, symbol 66) through the third fuel pipe (FIG. 3, symbol 74), and the fuel return port 125 is connected to the fuel tank (FIG. 3, symbol 42) through the return pipe (FIG. 3, symbol 75).

Now, a system diagram will be described below.

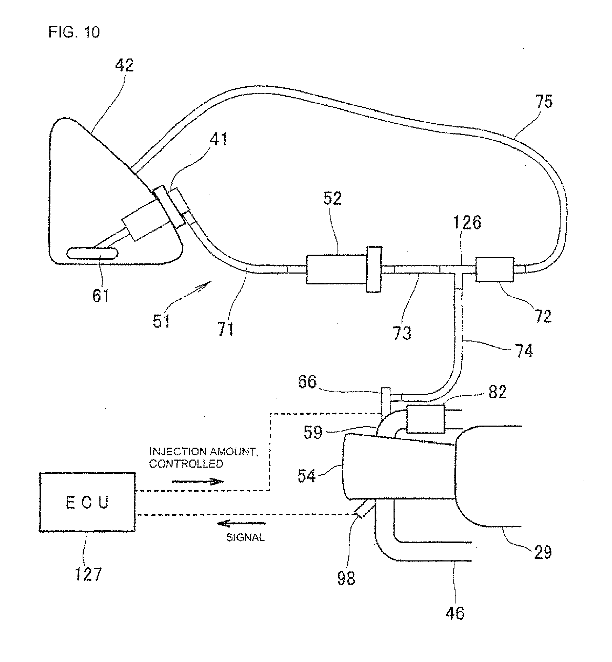

As shown in FIG. 10, the fuel in the fuel tank 42 is fed under pressure by the fuel pump 41 to flow through the pre-pump filter 61, the first fuel pipe 71, the fuel filter 52, the second fuel pipe 73, the branching part 126 of the pressure regulator 72, and the third fuel pipe 74, to be supplied from the injector 66 to the unit swing type engine 29 side.

Incidentally, the pressure regulator 72 returns a portion of the fuel to the fuel tank 42 through the return pipe 75 connecting the pressure regulator 72 and the fuel tank 42 to each other when the fuel pressure in the fuel supply line 51 between the fuel pump 41 and the injector 66 is increased to reach a predetermined pressure.

Besides, even in the case where, for example, a mixed fuel of ethanol and gasoline is used and the mixing ratio is changed due to fuel supply, fuel injection optimal for starting can be performed and the unit swing type engine 29 can be started favorably, since the fuel before the change in the ethanol-gasoline mixing ratio is filling the fuel supply line 51 in the range from the fuel tank 42 to the fuel supply device 66 and this mixing ratio has already been learned by an ECU 127 mounted on the vehicle. In addition, after the starting of the unit swing type engine 29, the change in the mixing ratio is re-learned by the ECU 127 on the basis of a signal from, for example, an O₂ sensor 98 provided so as to project into the exhaust port of the cylinder unit 54, and the fuel injection amount at the injector 66 is controlled, so as to perform fuel injection optimal for the ethanol-gasoline mixing ratio after the starting of the unit swing type engine 29.

Now, the above descriptions will be summarized as follows.

As shown in FIGS. 5 and 7 above, the motor scooter type vehicle includes the body frame 27, the unit swing type engine 29 supported on the body frame 27 in a vertically swingable manner, the fuel tank 42 supported on the body frame 27 on the front side of the unit swing type engine 29, the fuel supply line 51 through which the fuel in the fuel tank 42 is supplied to the unit swing type engine 29, the fuel filter 52 disposed at an intermediate portion of the fuel supply line 51, the pair of left and right step boards 67L, 67R provided on vehicle lateral sides of the fuel tank 42, and the under cover 85 covering the lower side of the step board 67L, the body frame 27 and the fuel tank 42, and, in this motor scooter type vehicle, the fuel filter 52 is disposed in the space surrounded by the side surface 86 of the fuel tank 42, the step board 67L and the under cover 85.

This configuration ensures that, since the fuel filter 52 is disposed in the space surrounded by the side surface 86 of the fuel tank 42, the step board 67L and the under cover 85, it is possible, by utilizing the space formed between the step board 67L and the under cover on a lateral side in the vehicle width direction of the fuel tank 42, to freely set the capacity of the fuel filter 52, without imposing any restriction on swinging of the unit swing type engine 29 and without any restriction imposed by the swinging.

As shown in FIGS. 3 to 5 and 7 above, the step support frame 84L for supporting the step board 67L is mounted to a lateral side of the body frame 27, and the fuel filter 52 is disposed on a vehicle inner side relative to the step support frame 84L.

This configuration ensures that, since the fuel filter 52 is disposed on a vehicle inner side relative to the step support frame 84L, the vehicle outer side of the fuel filter 52 can be protected with the step support frame 84L.

As shown in FIGS. 3 and 4 above, the body frame 27 has the head pipe 11 and the main frame 21L extending from the head pipe 11 toward a lower rear side; and the step support frame 84L is disposed on an outer side in the vehicle width direction relative to the fuel filter 52, and the main frame 21L is disposed on an inner side in the vehicle width direction relative to the fuel filter 52, in a plan view of the vehicle.

This configuration results in that the frames 27 (21L, 84L) are disposed on both left and right sides in the vehicle width direction of the fuel filter 52, and, accordingly, both the left and right sides in the vehicle width direction of the fuel filter 52 can be protected with the frames 27.

As shown in FIG. 2 above, the step board 67L on the upper side of the fuel filter 52 is provided with the maintenance opening 68 for mounting and dismounting the fuel filter 52 therethrough, and the maintenance lid 69 for openably closing the maintenance opening 68.

This configuration ensures that, since the step board 67L on the upper side of the fuel filter 52 is provided with the maintenance opening 68 for mounting and dismounting the fuel filter 52 therethrough and the maintenance lid 69 for openably closing the maintenance opening 68, operations of mounting and dismounting the fuel filter 52 can be performed by simply opening the maintenance lid 69, without being obstructed by the frames 27 (21L, 84L) shown in FIG. 4 which are present on both the left and right sides in the vehicle width direction of the fuel filter 52. Accordingly, replacement work for the fuel filter 52 can be carried out easily.

As shown in FIGS. 1 and 5 above, the main frame 21L includes the upper frame 22L extending from the head pipe 11 toward a lower rear side of the vehicle, and the lower frame 23L disposed on the lower side of the upper frame 22L and extending from the head pipe 11 toward a lower rear side; and the fuel filter 52 is disposed between the lower frame 23L and the step support frame 84L in a side view of the vehicle.

This configuration results in that the frames 23L, 84L are disposed on the upper and lower sides of the fuel filter 52, and, accordingly, both the upper and lower sides of the fuel filter 52 can be protected with the frames 23L, 84L.

As shown in FIGS. 3 and 4 above, the under cover 85 is made of resin, and is integrally formed with the mounting part 88 by which the fuel filter 52 can be dismountably mounted to the inner surface 87 of the resin-made under cover 85.

This configuration ensures that, at the time of molding the under cover 85 made of resin, the mounting part 88 can also be molded integrally therewith. In addition, the number of component parts can be reduced, as compared with the case where a mounting part 88 for the fuel filter 52 is separately provided on the body frame 27.

As shown in FIGS. 3 and 4 above, the fuel supply line 51 is provided with the fuel supply device 66 for supplying the fuel in the fuel tank 52 to the unit swing type engine 29, the fuel pump 41 by which the fuel in the fuel tank 42 is fed under pressure to the fuel supply device 66, and the pressure regulator 72 which is disposed between the fuel filter 52 and the fuel supply device 66 and by which a portion of the fuel is returned to the fuel tank 42 when the fuel pressure between the fuel pump 41 and the fuel supply device 66 is increased to reach a predetermined pressure; and the pressure regulator 72 is disposed in the space surrounded by a side surface of the fuel tank 42 and the step board 67L and the under cover 85.

This configuration ensures that, since the pressure regulator 72 is disposed in the space surrounded by the side surface 86 of the fuel tank 42 and the step board 67L and the under cover 85, the pressure regulator 72 is disposed within the front-rear length of the fuel tank 42. Therefore, the return pipe 75 for returning the fuel from the pressure regulator 72 to the fuel tank 42 can be shortened in length.

As shown in FIG. 1 above, the fuel supply device 66 is disposed above the fuel filter 52, in a side view of the vehicle.

This configuration ensures that, since the fuel supply line 51 between the fuel filter 52 and the fuel supply device 66 extends upward from the fuel filter 52, leakage of the fuel from the fuel supply device 66 due to the weight of the fuel collected in the fuel filter 52 can be restrained, even when the vehicle is parked for a long period of time.

As shown in FIG. 1 above, the fuel supply line 51 is provided with the pre-pump filter 61 on the upstream side of the fuel pump 41, and the fuel filter 52 is set to be finer in pore size than the pre-pump filter 61.

This configuration ensures that, since the pore size of the fuel filter 52 and the pore size of the pre-pump filter 61 are set to be different, it is possible, even in the case of using a fuel in which fine dust is contained such as ethanol, to trap coarser dust by the pre-pump filter 61 and to trap by the fuel filter 52 the finer dust having failed to be trapped by the pre-pump filter 61. Accordingly, such a fuel as ethanol can be used.

In addition, since coarser dust is trapped by the pre-pump filter 61 and therefore coarser dust is not trapped by the fuel filter 52, the possibility of clogging of the fuel filter 52 can be lowered, and the frequency of replacement of the fuel filter 52 can be reduced. Furthermore, the pre-pump filter 61 is coarse in pore size and therefore the possibility of clogging of the pre-pump filter 61 can be lowered, so that the pre-pump filter 61 is restrained from constituting a resistance against the operation of the fuel pump 41. Accordingly, an inexpensive fuel pump 41 can be adopted.

Incidentally, application of the present example is not limited to the motor scooter type vehicle 10 on which a unit swing type engine using gasoline as a fuel is mounted; for instance, the present example may be applied to a motor scooter type vehicle 10 on which a unit swing type engine 29 using such a bio-fuel as ethanol as a fuel is mounted, insofar as the fuel can be clarified by the fuel filter 52.

### [Industrial Applicability]

The present invention is preferable for an improvement in a motor scooter type vehicle, specifically, for layout of a fuel filter provided in a motor scooter type vehicle.

### [Description of Reference Symbols]

10 ... Motor scooter type vehicle, 11 ... Head pipe, 21L, 21R ... Main frame, 22L, 22R ...Upper frame, 23L, 23R ... Lower frame, 27 ... Body frame, 28 ... Link, 29 ... Unit swing type engine, 41 ... Fuel pump, 42 ... Fuel tank, 46 ... Exhaust pipe, 48 ... Body cover, 51 ... Fuel supply line, 52 ... Fuel filter, 53 ... Crankcase, 54 ... Cylinder unit, 61 ... Pre-pump filter, 65 ... Vehicle body center line, 66 ... Fuel supply device (Injector), 67L ... Step board, 68 ... Maintenance opening, 69 ... Maintenance lid, 72 ... Pressure regulator, 84L, ... 84R Step support frame, 85 ... Under cover, 86 ... Side surface, 87 ... Inner surface, 88 ... Mounting part.

## Claims

1. A motor scooter type vehicle (10) comprising a body frame (27), a unit swing type engine (29) supported on the body frame (27) in a vertically swingable manner, a fuel tank (42) supported on the body frame (27) on a front side of the unit swing type engine (29), a fuel supply line (51) through which a fuel in the fuel tank (42) is adapted to be supplied to the unit swing type engine (29), a fuel filter (52) disposed at an intermediate portion of the fuel supply line (51), a pair of left and right step boards (67L, 67R) provided on vehicle lateral sides of the fuel tank (42), and an under cover (85) covering a lower side of the left step board (67L) and the fuel tank (42),
**characterized in that** the under cover (85) further covers a lower side of the body frame (27), and the fuel filter (52) is disposed in a space surrounded by a lateral side surface (86) in a vehicle width direction of the fuel tank (42), the left step board (67L) and the under cover (85).

2. The motor scooter type vehicle according to claim 1,
wherein a step support frame (84L) for supporting the left step board (67L) is mounted to a lateral side of the body frame (27), and
the fuel filter (52) is disposed on a vehicle inner side relative to the step support frame (84L).

3. The motor scooter type vehicle according to claim 2,
wherein the body frame (27) has a head pipe (11) and a main frame (21L) extending from the head pipe (11) toward a lower rear side of the vehicle; and
the step support frame (84L) is disposed on an outer side in the vehicle width direction relative to the fuel filter (52), and the main frame (21L) is disposed on an inner side in the vehicle width direction relative to the fuel filter (52), in a plan view of the vehicle.

4. The motor scooter type vehicle according to claim 3, wherein the left step board (67L) on the upper side of the fuel filter (52) is provided with a maintenance opening (68) for mounting and dismounting the fuel filter (52) therethrough, and a maintenance lid (69) for openably closing the maintenance opening (68).

5. The motor scooter type vehicle according to claim 4,
wherein the main frame (21L) comprises an upper frame (22L) extending from the head pipe (11) toward a lower rear side of the vehicle, and a lower frame (23L) disposed on a lower side of the upper frame (22L) and extending from the head pipe (11) toward a lower rear side of the vehicle; and the fuel filter (52) is disposed between the lower frame (23L) and the step support frame (84L) in a side view of the vehicle.

6. The motor scooter type vehicle according to any of claims 1 to 5, wherein the under cover (85) is made of resin, and is integrally formed with a mounting part (88) by which the fuel filter (52) can be dismountably mounted to an inner surface (87) of the resin-made under cover (85).

7. The motor scooter type vehicle according to any of claims 1 to 6,
wherein the fuel supply line (51) is provided with a fuel supply device (66) for supplying the fuel in the fuel tank (42) to the unit swing type engine (29), a fuel pump (41) by which the fuel in the fuel tank (42) is adapted to be fed under pressure to the fuel supply device (66), and a pressure regulator (72) which is disposed between the fuel filter (52) and the fuel supply device (66) and by which a portion of the fuel is adapted to be returned to the fuel tank (42) when the fuel pressure between the fuel pump (41) and the fuel supply device (66) is increased to reach a predetermined pressure; and
the pressure regulator (72) is disposed in a space surrounded by the lateral side surface (86) in the vehicle width direction of the fuel tank (42) and the left step board (67L) and the under cover (85).

8. The motor scooter type vehicle according to claim 7, wherein the fuel supply device (66) is provided above the fuel filter (52), in the side view of the vehicle.

9. The motor scooter type vehicle according to claim 8,
wherein, in the fuel supply line (51), a pre-pump filter (61) is provided on an upstream side of the fuel pump (41), and
the fuel filter (52) is set to be finer in pore size than the pre-pump filter (61).

## Patentansprüche

1. Fahrzeug (10) vom Motorroller-Typ, umfassend einen Körperrahmen (27), einen Motor (29) vom Schwenkeinheit-Typ, der an dem Körperrahmen (27) in einer vertikal schwenkbaren Weise gelagert ist, einen Kraftstofftank (42), der an dem Körperrahmen (27) auf einer Vorderseite von dem Motor (29) vom Schwenkeinheit-Typ abgestützt ist, eine Kraftstoff-Zufuhrleitung (51) durch welche ein Kraftstoff im Kraftstofftank (42) dazu ausgebildet ist, an den Motor (29) vom Schwenkeinheit-Typ geliefert zu werden, einen Kraftstofffilter (52), der an einem Zwischenabschnitt der Kraftstoff-Zufuhrleitung (51) angeordnet ist, ein Paar von linken und rechten Trittbrettern (67L, 67R), die auf bezüglich des Fahrzeugs lateralen Seiten von dem Kraftstofftank (42) vorgesehen sind, und eine untere Abdeckung (85), die eine untere Seite von dem linken Trittbrett (67L) und den Kraftstofftank (42) abdeckt, **dadurch gekennzeichnet, dass** die untere Abdeckung (85) weiterhin eine untere Seite von dem Körperrahmen (27) abdeckt, und der Kraftstofffilter (52) in einem Raum angeordnet ist, der durch eine in einer Fahrzeugbreitenrichtung laterale Seitenfläche (86) von dem Kraftstofftank (42), das linke Trittbrett (67L) und die untere Abdeckung (85) umgeben ist.

2. Fahrzeug vom Motorroller-Typ nach Anspruch 1, wobei ein Tritt-Stützrahmen (84L) zum Abstützen von dem linken Trittbrett (67L) an einer lateralen Seite von dem Körperrahmen (27) angebracht ist, und der Kraftstofffilter (52) auf einer Fahrzeuginnenseite relativ zu dem Tritt-Stützrahmen (84L) angeordnet ist.

3. Fahrzeug vom Motorroller-Typ nach Anspruch 2, wobei der Körperrahmen (27) ein Kopfrohr (11) und einen Hauptrahmen (21 L) aufweist, der sich von dem Kopfrahmen (11) zu einer unteren Rückseite von dem Fahrzeug hin erstreckt, und der Tritt-Stützrahmen (84L) an einer äußeren Seite in der Fahrzeugbreitenrichtung relativ zu dem Kraftstofffilter (52) angeordnet ist, und der Hauptrahmen (21 L) auf einer inneren Seite in der Fahrzeugbreitenrichtung relativ zu dem Kraftstofffilter (52) in einer Draufsicht auf das Fahrzeug angeordnet ist.

4. Fahrzeug vom Motorroller-Typ nach Anspruch 3, wobei das linke Trittbrett (67L) auf der oberen Seite von dem Kraftstofffilter (52) mit einer Wartungsöffnung (68) versehen ist, um dort hindurch den Kraftstofffilter (52) zu montieren und zu demontieren, und mit einem Wartungsdeckel (69) versehen ist, um die Wartungsöffnung (68) öffenbar zu schließen.

5. Fahrzeug vom Motorroller-Typ nach Anspruch 4, wobei der Hauptrahmen (21 L) einen oberen Rahmen (22L) umfasst, der sich von dem Kopfrohr (11) zu einer unteren Rückseite von dem Fahrzeug hin erstreckt, und einen unteren Rahmen (23L) umfasst, der auf einer unteren Seite von dem oberen Rahmen angeordnet ist und sich von dem Kopfrohr (11) zu einer unteren Rückseite von dem Fahrzeug hin erstreckt, und der Kraftstofffilter (52) zwischen dem unteren Rahmen (23L) und dem Tritt-Stützrahmen (84L) in einer Seitenansicht des Fahrzeugs angeordnet ist.

6. Fahrzeug vom Motorroller-Typ nach einem der Ansprüche 1 bis 5, wobei die untere Abdeckung (85) aus Harz bzw. Kunstharz besteht und integral mit einem Montageteil (88) ausgebildet ist, durch welches der Kraftstofffilter (52) lösbar an einer inneren Fläche (87) von der aus Harz bzw. Kunstharz hergestellten unteren Abdeckung (85) montiert werden kann.

7. Fahrzeug vom Motorroller-Typ nach einem der Ansprüche 1 bis 6, wobei die Kraftstoff-Zufuhrleitung (51) mit einer Kraftstoff-Zufuhreinrichtung (66) ausgestattet ist, um den Kraftstoff in dem Kraftstofftank (42) zu dem Motor (29) vom Schwenkeinheit-Typ zu liefern, mit einer Kraftstoffpumpe (41), durch welche der Kraftstoff in dem Kraftstofftank (42) dazu angepasst ist, unter Druck der Kraftstoff-Zufuhreinrichtung (66) zugeführt zu werden, und mit einem Druck-Regulator (72), der zwischen dem Kraftstofffilter (52) und der Kraftstoff-Zufuhreinrichtung (66) angeordnet ist, und durch welchen ein Teil von dem Kraftstoff dazu angepasst ist, zu dem Kraftstofftank (42) zurückgeführt zu werden, wenn der Kraftstoff-Druck zwischen der Kraftstoffpumpe (41) und der Kraftstoff-Zufuhreinrichtung (66) so vergrößert wird, dass er einen vorbestimmten Druck erreicht, und
der Druck-Regulator (72) in einem Raum angeordnet ist, der durch die in der Fahrzeug-Breitenrichtung laterale Seitenfläche (86) von dem Kraftstofftank (42) und das linke Trittbrett (67L) und die untere Abdeckung (85) umgeben ist.

8. Fahrzeug vom Motorroller-Typ nach Anspruch 7, wobei die Kraftstoff-Zufuhreinrichtung (66) oberhalb von dem Kraftstofffilter (52) in der Seitenansicht von dem Fahrzeug vorgesehen ist.

9. Fahrzeug vom Motorroller-Typ nach Anspruch 8, wobei in der Kraftstoff-Zufuhrleitung (51) ein Vorpumpenfilter (61) auf einer stromaufwärtigen Seite der Kraftstoffpumpe (41) vorgesehen ist, und der Kraftstofffilter (52) so eingestellt ist, dass er in der Porengröße feiner ist als der Vorpumpenfilter (61).

## Revendications

1. Véhicule motorisé de type scooter (10) comprenant une ossature de caisse (27), un moteur de type à bloc oscillant (29) supporté sur l'ossature de caisse (27) de manière oscillante verticalement, un réservoir de carburant (42) supporté sur l'ossature de caisse (27) sur un côté avant du moteur de type à bloc oscillant (29), une conduite d'alimentation en carburant (51) à travers laquelle un carburant dans le réservoir de carburant (42) est adapté pour être alimenté au moteur de type à bloc oscillant (29), un filtre à carburant (52) disposé au niveau d'une portion intermédiaire de la conduite d'alimentation en carburant (51), une paire de marchepieds gauche et droit (67L, 67R) fournis sur des côtés latéraux de véhicule du réservoir de carburant (42), et un carénage inférieur (85) recouvrant un côté inférieur du marchepied gauche (67L) et du réservoir de carburant (42),
**caractérisé en ce que** le carénage inférieur (85) recouvre en outre un côté inférieur de l'ossature de caisse (27), et le filtre à carburant (52) est disposé dans un espace entouré par une surface de côté latéral (86) dans une direction de largeur de véhicule du réservoir de carburant (42), du marchepied gauche (67L) et du carénage inférieur (85).

2. Véhicule motorisé de type scooter selon la revendication 1,
dans lequel une ossature de support de marche (84L) permettant de supporter le marchepied gauche (67L) est montée sur un côté latéral de l'ossature de caisse (27), et
le filtre à carburant (52) est disposé sur un côté interne de véhicule par rapport à l'ossature de support de marche (84L).

3. Véhicule motorisé de type scooter selon la revendication 2,
dans lequel l'ossature de caisse (27) a une tubulure de refoulement (11) et une ossature principale (21L) s'étendant depuis la tubulure de refoulement (11) vers un côté arrière inférieur du véhicule ; et
l'ossature de support de marche (84L) est disposée sur un côté externe dans la direction de largeur de véhicule par rapport au filtre à carburant (52), et l'ossature principale (21L) est disposée sur un côté interne dans la direction de largeur de véhicule par rapport au filtre à carburant (52), dans une vue en plan du véhicule.

4. Véhicule motorisé de type scooter selon la revendication 3, dans lequel le marchepied gauche (67L) sur le côté supérieur du filtre à carburant (52) est pourvu d'une ouverture de maintenance (68) permettant de monter et démonter le filtre à carburant (52) par l'intermédiaire de celle-ci, et un couvercle de maintenance (69) permettant de fermer de manière ouvrable l'ouverture de maintenance (68).

5. Véhicule motorisé de type scooter selon la revendication 4,
dans lequel l'ossature principale (21L) comprend une ossature supérieure (22L) s'étendant depuis la tubulure de refoulement (11) vers un côté arrière inférieur du véhicule, et une ossature inférieure (23L) disposée sur un côté inférieur de l'ossature supérieure (22L) et s'étendant depuis la tubulure de refoulement (11) vers un côté arrière inférieur du véhicule ; et
le filtre à carburant (52) est disposé entre l'ossature inférieure (23L) et l'ossature de support de marche (84L) dans une vue de côté du véhicule.

6. Véhicule motorisé de type scooter selon l'une quelconque des revendications 1 à 5, dans lequel le carénage inférieur (85) est constitué de résine, et est intégralement formé avec une partie de montage (88) par laquelle le filtre à carburant (52) peut être monté de façon démontable sur une surface interne (87) du carénage inférieur constitué de résine (85).

7. Véhicule motorisé de type scooter selon l'une quelconque des revendications 1 à 6,
dans lequel la conduite d'alimentation en carburant (51) est pourvue d'un dispositif d'alimentation en carburant (66) permettant d'alimenter le carburant dans le réservoir de carburant (42) au moteur de type à bloc oscillant (29), une pompe à carburant (41) grâce à laquelle le carburant dans le réservoir de carburant (42) est adapté pour être amené sous pression au dispositif d'alimentation en carburant (66), et un régulateur de pression (72) qui est disposé entre le filtre à carburant (52) et le dispositif d'alimentation en carburant (66) et grâce auquel une portion du carburant est adaptée pour être renvoyée au réservoir de carburant (42) lorsque la pression de carburant entre la pompe à carburant (41) et le dispositif d'alimentation en carburant (66) est augmentée pour atteindre une pression prédéterminée ; et
le régulateur de pression (72) est disposé dans un espace entouré par la surface de côté latéral (86) dans la direction de largeur de véhicule du réservoir de carburant (42) et du marchepied gauche (67L) et du carénage inférieur (85).

8. Véhicule motorisé de type scooter selon la revendication 7, dans lequel le dispositif d'alimentation en carburant (66) est fourni au-dessus du filtre à carburant (52), dans la vue de côté du véhicule.

9. Véhicule motorisé de type scooter selon la revendication 8,
dans lequel, dans la conduite d'alimentation en carburant (51), un filtre de prépompe (61) est fourni sur un côté amont de la pompe à carburant (41), et
le filtre à carburant (52) est réglé pour avoir une taille de pore plus fine que le filtre de prépompe (61).
